# EUROPEAN PATENT APPLICATION

(11) **EP 1 316 827 A1**
(43) Date of publication of application: **04.06.2003**
(21) Application number: 01310095.3
(22) Date of filing: 03.12.2001
(51) Int. Cl.: G02B 6/42

(54) **Coupling arrangement and method therefore**

(71) Applicant: Agilent Technologies, Inc. (a Delaware corporation), Palo Alto, CA 94303 (US)
(72) Inventor: McGhee, Andrew, Stowmarket, Suffolk IP14 1UA (GB); Keeble, Daniel John, Felixstowe, Suffolk IP11 9BU (GB); Anderson, Jamie, Ipswich, Suffolk IP1 3LU (GB)
(74) Representative: Coker, David Graeme

(57) **Abstract**

Aligning an optical fibre (30) with a bulk optical component (20) to enable coupling between the optical fibre (30) and the bulk optical component (20) is a difficult and time-consuming process. Accordingly, the present invention provides a ferrule (32) attached to an end of the optical fibre (30) and a socket (22) formed within the bulk optical component (20). The inclusion of the ferrule (32) and the socket (22) aids the alignment and coupling of an end face of the optical fibre (30) with the bulk optical component (20).

## Description

The present invention relates to a coupling arrangement of a type used, for example, when coupling an optical fibre to a bulk optical component. The present invention also relates to a method of manufacturing the coupling arrangement.

In an optical communication system, it is sometimes necessary to couple optical fibres to bulk optical components such as those accommodating optoelectronic devices. The coupling of the optical fibre to the bulk optical component requires a high precision alignment between the optical fibre and the bulk optical component. As most of the alignment procedure is manually performed and the optical fibre and the bulk optical component exist on a micron scale, such alignment is time consuming and requires expensive, high precision instrumentation.

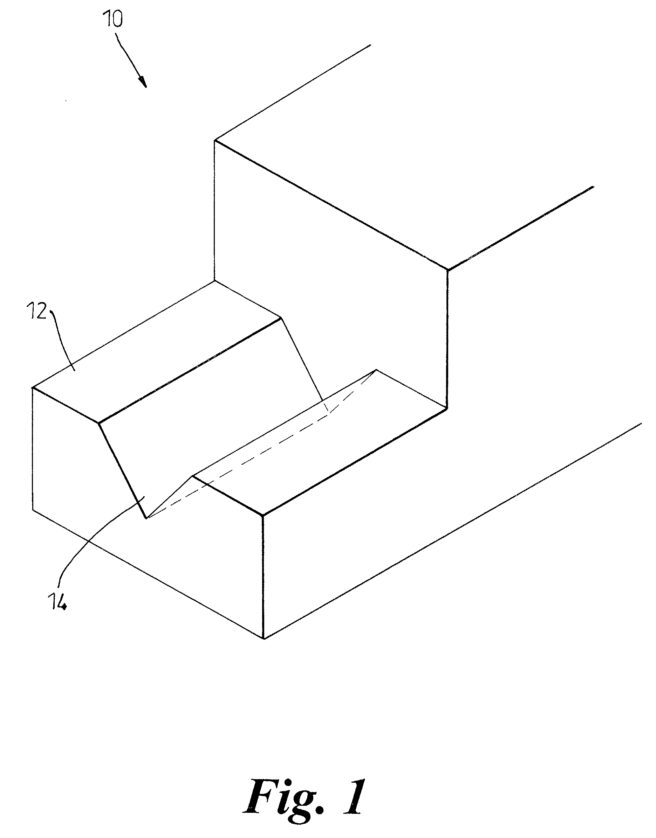

Figure 1 is a schematic diagram of a bulk optical component with a known design that is used to aid an alignment between the bulk optical component and an optical fibre (not shown). The bulk optical component 10 comprises a fibre-mount 12 having a v-groove 14 formed therein. The v-groove 14 constitutes a shaped channel within the fibre-mount 12 to receive the optical fibre. During alignment, the optical fibre is carefully positioned within the v-groove 14, and fixed in place using, for example, an optically clear light curable epoxy resin.

As already mentioned above, due to the small scale of the components requiring alignment, it is common and easy to incorrectly position the optical fibre in the v-groove 14. Should the optical fibre be incorrectly aligned with the bulk optical component 10, a poor coupling between the optical fibre and the bulk optical component 10 will result, leading to a loss of power and a reduction in efficiency at that junction.

According to a first aspect of the present invention, there is provided a coupling arrangement comprising a bulk optical component for coupling to a waveguide, the bulk optical component comprising a region for propagation of electromagnetic radiation therethrough, the arrangement being characterised by the bulk optical component comprising a socket integrally formed therewith to receive a push-fittable ferrule carrying an end of the waveguide, the ferrule having a substantially flat end face substantially coplanar with an end face of the waveguide, and, when in use, the socket and ferrule cooperating to hold the end face of the waveguide substantially against the region and align the end face of the waveguide with the region.

Preferably, the socket is cylindrical. More preferably the socket comprises an aperture for communicating fluid between the interior of the socket and the exterior of the bulk optical component.

Preferably, the aperture is a slot.

Preferably, the waveguide is an optical fibre.

According to a second aspect of the present invention, there is provided a use of a ferrule to hold an end face of a waveguide in alignment with a region of a bulk optical component.

According to a third aspect of the present invention, there is provided a ferrule for holding an end of a waveguide, the ferrule having a substantially flat end face for holding an end face of the waveguide in substantially coplanar relation with the end face of the ferrule, the ferrule being insertable into a socket to form a push-fit therewith for holding the end face of the waveguide substantially against a region of a bulk optical component and aligning the end face of the waveguide with the region.

According to a fourth aspect of the present invention, there is provided a bulk optical component comprising a region for propagation of electromagnetic radiation therethrough, the bulk optical component being characterised by a socket integrally formed therewith for receiving a ferrule carrying an end of a waveguide, and for forming a push-fit with the ferrule for holding an end face of the waveguide substantially against the region and aligning the end face of the waveguide with the region.

According to a fifth aspect of the present invention, there is provided a use of a bulk optical component to provide a socket integrally formed therewith for receiving an end face of a waveguide carried by a ferrule.

According to a sixth aspect of the present invention, there is provided a method of manufacturing a coupling for an end face of a waveguide to a region of a bulk optical component, the method comprising the steps of: forming the bulk optical component with a socket integrally formed therewith for receiving a ferrule capable of cooperating with the socket to form a push-fit for holding the end face of the waveguide substantially against the region and aligning the end face of the waveguide with the region.

Preferably, the method of manufacturing further comprises the step of: attaching the ferrule to an end of the waveguide, the ferrule having a substantially flat end face substantially coplanar with the end face of the waveguide.

It is thus possible to provide for a reliable, fast and cost efficient alignment of the optical fibre with the bulk optical component. Additionally, the bulk optical component can be easily tested using a test optical fibre coupled to a test optical fibre ferrule that can be removed after a test so that the bulk optical component can be connected with and fixed to a product fibre and ferrule according to the present invention.

At least one embodiment of the invention will now be described, by way of example only, with reference to the accompanying drawings, in which:
**Figure 2** is a schematic diagram of a bulk optical component constituting an embodiment of the present invention; and
**Figure 3** is a schematic diagram of the bulk optical component of Figure 2 coupled to an optical fibre.

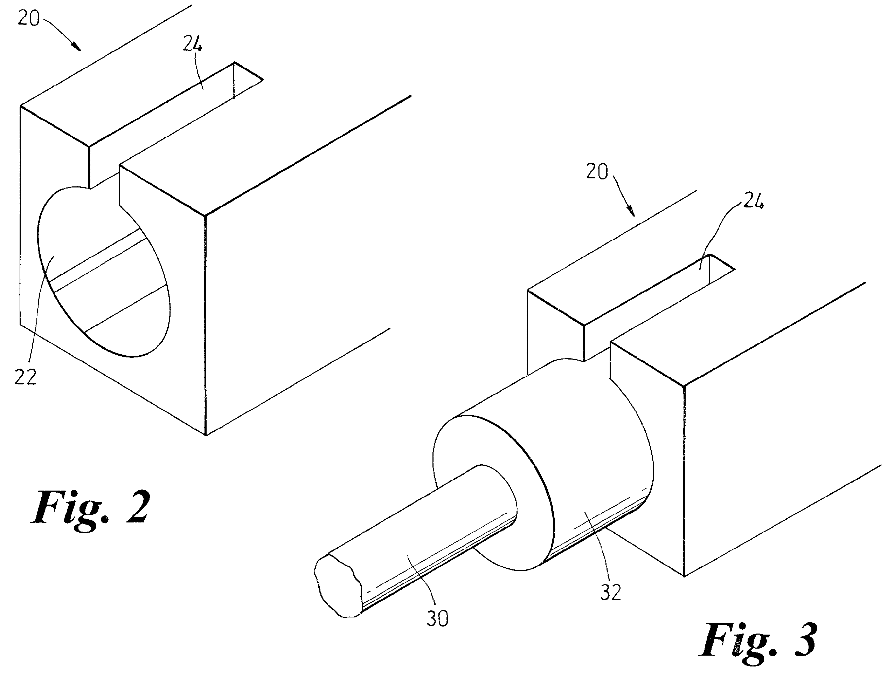

Referring to Figure 2, a bulk optical component 20 comprises a cylindrical socket 22, in this example a split sleeve, capable of accommodating an optical fibre ferrule (not shown in Figure 2). The socket 22 is integrally formed with the bulk optical component 20 by moulding the bulk optical component 20 to include a blind bore and a longitudinal slot 24 communicating the exterior of the bulk optical component 20 with the blind bore. The blind bore comprises an internal coupling surface (not shown) terminating the blind for receiving electromagnetic radiation. A window region (not shown) is provided in the internal coupling surface to permit electromagnetic radiation to propagate into and/or out of the bulk optical component 20

Referring to Figure 3, a circular ferrule 32 complementary to the circular socket is attached to an end of an optical fibre 30 to be coupled to the bulk optical component 20. The ferrule 32 is, in this example, of a known type for attaching to ends of optical fibres, for example, an LC type ferrule as manufactured by Lucent Technologies and constructed from ceramic, for example, zirconia. A coupling surface (not shown) of the ferrule 32 is planar and the end of the optical fibre 30 has a coupling end surface coplanar with the coupling surface of the ferrule 32.

Prior to alignment, an optically clear adhesive such as an epoxy resin, for example, an optically clear light curable resin, such as Norland NOA-61, is used to coat the internal surface of the socket 22 ready to receive the ferrule 32. Alternatively, the optically clear adhesive can be used to coat the outer surface of the ferrule 32 to be bonded to the internal surface of the socket 22. During alignment, the ferrule 32 attached to the optical fibre 30 is inserted into the socket 22. As the socket 22 is a split sleeve, a radial clearance exists within the socket 22.

The ferrule 32 carrying the end of the optical fibre 30 is pushed into the socket 22 so that the coupling surface of the ferrule 32 abuts the internal coupling surface of the socket 22. The adhesive in cooperation with the socket 22 and the ferrule 32 forms a substantially snug fit. In addition, the slot 24 provides an escape route for any excess adhesive between the socket 22 and the ferrule 32.

The final positional relationship of the inner cylindrical wall of the socket 22 with respect to the window region (not shown) and the consistent location of the optical fibre 30 with respect to the outer surface of the ferrule 32 ensures consistent, reliable, coupling of the end surface of the optical fibre with the window region. Efficient launch of electromagnetic radiation from the optical fibre 30 into the bulk optical component 20 is thus ensured.

If required, prior to permanent bonding of the ferrule 32 within the socket 22, a test optical fibre coupled to test equipment (not shown), and also having a removable (with respect to the socket 22) ferrule attached to an end of the test fibre, can be inserted into the socket 22 in order to test the bulk optical component 20.

It should be appreciated that although reference has been made to a particular shape of the cross-section of the socket 22 and the ferrule 32, namely circular, other shapes can be employed.

## Claims

1. A coupling arrangement comprising a bulk optical component (20) for coupling to a waveguide (30), the bulk optical component (20) comprising a region for propagation of electromagnetic radiation therethrough, the arrangement being **characterised by** the bulk optical component (20) comprising a socket (22) integrally formed therewith to receive a push-fittable ferrule (32) carrying an end of the waveguide (30), the ferrule (32) having a substantially flat end face substantially coplanar with an end face of the waveguide (30), and, when in use, the socket (22) and ferrule (32) cooperating to hold the end face of the waveguide (30) substantially against the region and align the end face of the waveguide (30) with the region.

2. A coupling arrangement as claimed in Claim 1, wherein the socket (22) is cylindrical.

3. A coupling arrangement as claimed in Claim 1 or Claim 2, wherein the socket (22) comprises an aperture (24) for communicating fluid between the interior of the socket (22) and the exterior of the bulk optical component (20).

4. A coupling arrangement as claimed in Claim 3, wherein the aperture (24) is a slot.

5. A coupling arrangement as claimed in any one of the preceding claims, wherein the waveguide (30) is an optical fibre.

6. A use of a ferrule (32) to hold an end face of a waveguide (30) in alignment with a region of a bulk optical component (20).

7. A ferrule (32) for holding an end of a waveguide (30), the ferrule (32) having a substantially flat end face for holding an end face of the waveguide (30) in substantially coplanar relation with the end face of the ferrule (32), the ferrule (32) being insertable into a socket (22) to form a push-fit therewith for holding the end face of the waveguide (30) substantially against a region of a bulk optical component (20) and aligning the end face of the waveguide (30) with the region.

8. A bulk optical component (20) comprising a region for propagation of electromagnetic radiation therethrough, the bulk optical component (20) being **characterised by** a socket (22) integrally formed therewith for receiving a ferrule (32) carrying an end of a waveguide (30), and for forming a push-fit with the ferrule (32) for holding an end face of the waveguide (30) substantially against the region and aligning the end face of the waveguide (30) with the region.

9. A use of a bulk optical component (20) to provide a socket (22) integrally formed therewith for receiving an end face of a waveguide (30) carried by a ferrule (32).

10. A method of manufacturing a coupling for an end face of a waveguide (30) to a region of a bulk optical component (20), the method comprising the steps of:
forming the bulk optical component (20) with a socket (22) integrally formed therewith for receiving a ferrule (32) capable of cooperating with the socket (22) to form a push-fit for holding the end face of the waveguide (30) substantially against the region and aligning the end face of the waveguide (30) with the region.

11. A method as claimed in Claim 10, further comprising the step of:
attaching the ferrule (32) to an end of the waveguide (30), the ferrule (32) having a substantially flat end face substantially coplanar with the end face of the waveguide (30).
